# EUROPEAN PATENT SPECIFICATION

(11) **EP 3 243 675 B1**
(45) Date of publication and mention of the grant of the patent: **18.09.2019**
(21) Application number: 17020197.4
(22) Date of filing: 05.05.2017
(51) Int. Cl.: B60G 21/055

(54) **BEARING OF AN ANTI-ROLL BAR OF A MOTOR VEHICLE**
LAGER FÜR EINEN STABILISATOR EINES KRAFTFAHRZEUGS
PALIER D'UNE BARRE ANTIROULIS D'UN VÉHICULE AUTOMOBILE

(30) Priority: 10.05.2016 DE 102016108618
(43) Date of publication of application: 15.11.2017
(73) Proprietor: Dr.Ing. h.c. F. Porsche Aktiengesellschaft, 70435 Stuttgart (DE); Angst Pfister Gelismis Teknik Çözümler A.S., 16225 Nilüfer/Bursa (TR)
(72) Inventor: MALEK, Michael, 70569 Stuttgart (DE); KOCH, Thorsten, 71701 Schwieberdingen (DE); SERBEST, Ali Kamil, 16225 Bursa (TR); SANCAKSADE, Kubilay, 16225 Bursa (TR); YILDIRIM, Erkan, 16225 Bursa (TR)

(56) References cited:
- DE-U1- 8 901 526
- FR-A1- 2 720 692
- US-B1- 6 513 801

## Description

The invention relates to a bearing for an anti-roll bar of a motor vehicle in accordance with the preamble of patent claim 1.

An anti-roll bar of a motor vehicle is configured as a torsional spring, usually as a U-shaped torsional spring. Ends of the torsional spring connect wheel suspension systems of an axle of a motor vehicle. With the aid of bearings, the anti-roll bar is mounted on a body of the motor vehicle or on a chassis of the motor vehicle, the ends being fastened rotatably to, for example, transverse links of the chassis. The bearings are configured as metal/rubber bearings.

A bearing for an anti-roll bar of a motor vehicle can be gathered from patent specification EP 1 391 333 B2, the rubber body of which bearing has an intermediate ring which divides the rubber body into an outer ring and an inner ring. The rubber body is surrounded by an outer shell. Here, a cross section of the anti-roll bar is of greater configuration than a cross section of the rubber body which receives the anti-roll bar. During joining of the bearing to the anti-roll bar, the inner ring which is in contact with the anti-roll bar is compressed, as a result of which a prestress of the outer ring is achieved. DE 89 01 526 U1 discloses another bearing according to the preamble of claim 1.

The invention is based on the object of providing an improved bearing for an anti-roll bar of a motor vehicle.

According to the invention, the object is achieved by way of a bearing for an anti-roll bar of a motor vehicle having the features of patent claim 1. Advantageous refinements with expedient and non-trivial developments of the invention are specified in the respective subclaims.

A bearing according to the invention for an anti-roll bar of a motor vehicle has a rubber body and at least two structural elements for configuring an outer contour. The rubber body is divided radially by an intermediate ring into an outer ring and an inner ring. In order to achieve a prestress which acts on the outer ring, the at least two structural elements have an outer circumference which is configured so as to surround the outer ring only in sections.

During joining to the anti-roll bar, a prestressing force of the bearing according to the prior art is generated as it were by a force which acts on an inner face of the bearing in the direction of an outer face of the bearing. The prestressing force of the bearing according to the invention is brought about on account of a force which is to be applied on the outer face and therefore acts from the outer face in the direction of the inner face. The advantage is the achievement of a lower torsional rigidity of the bearing and a considerably improved distribution of load components which act on the outer ring and the inner ring. An extension of a service life of the bearing can be brought about as a result.

The structural elements have a radially extending compression gap. The compression gap serves for the configuration in sections of the outer circumference of the at least two structural elements. Therefore, the structural elements have faces which are spaced apart from one another at least on their outer circumference. In the case of a reduction in a width of the compression gap, the faces which are configured so as to face one another are pressed together. As a result, at least the outer circumference of the at least two structural elements is reduced. On account of said reduction in the outer circumference, the outer ring is prestressed, since it is in contact with the at least two structural elements. The compression of the at least two structural elements or the pressing together can be brought about with the aid of a clip which is placed around the outer circumference of the structural elements or by way of a suitable auxiliary frame which has a variable receiving cross section for receiving the bearing.

The compression gap is configured so as to extend, starting from an outer face of the at least two structural elements, as far as but outside the outer ring. Since the compression gap extends completely over a radial extent of the structural elements, a higher prestress on the outer ring can be achieved.

In one preferred refinement, the at least two structural elements have a plurality of compression gaps which are arranged symmetrically over a circumference of the outer ring. Therefore, an increase in the prestress can be brought about on account of a plurality of compression gaps. As a result of the symmetrical arrangement of the compression gaps, the prestress acts on the outer ring in a homogeneously distributed manner.

In one preferred refinement of the bearing according to the invention, the outer ring is connected to the structural elements and/or to the intermediate ring. This provides the advantage that the outer ring cannot be incorrectly positioned relative to the structural elements and/or the intermediate ring. In other words, the outer ring cannot change its original position axially in the direction of a longitudinal axis of the anti-roll bar. That is to say, contact faces which are configured between the outer face and/or the intermediate ring and the outer ring are of unchangeable configuration.

Further advantageous stabilization of the bearing with regard to its axial position relative to the anti-roll bar can be achieved by virtue of the fact that the inner ring is connected to the intermediate ring.

In a further refinement, a radial first extent of the outer ring is smaller than a radial second extent of the inner ring.

The bearing is preferably produced inexpensively with the aid of a plastic injection molding process.

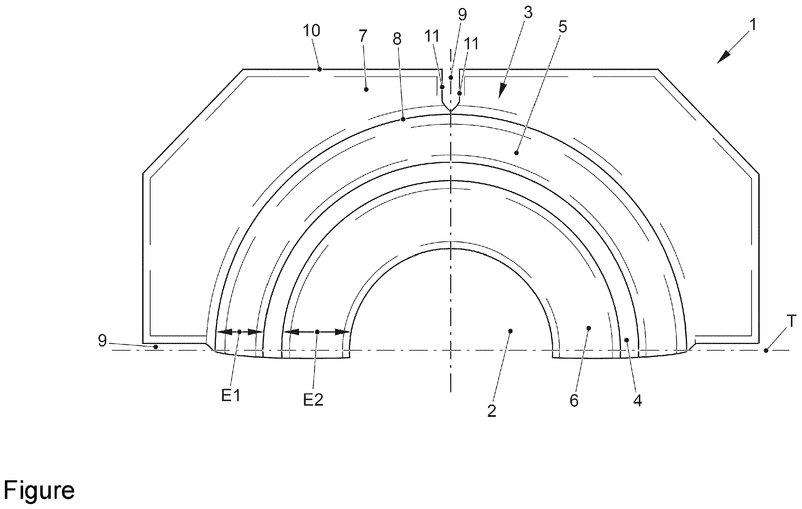

Further advantages, features and details of the invention result from the following description of preferred exemplary embodiments and using the drawing.

Identical or functionally identical elements are assigned identical designations. The single figure shows a plan view of a detail of a bearing according to the invention for an anti-roll bar of a motor vehicle.

A bearing 1 which is constructed according to the figure is configured for an anti-roll bar (not shown in greater detail) of a motor vehicle. The anti-roll bar is of approximately U-shaped design and can be produced from a solid rod or a tube. It serves to stabilize the movement of the motor vehicle and is loaded, in particular, when driving around bends.

The anti-roll bar is mounted with the aid of the bearing 1 on a chassis (not shown in greater detail) of the motor vehicle. To this end, it is received in a passage opening 2 of the bearing 1. The bearing 1 is configured so as to surround the anti-roll bar completely on its circumference.

The figure shows a detail of the bearing 1. The detail shows a half of the bearing 1, the other half which is not shown in greater detail being of symmetrical configuration with respect to the dividing line T.

A rubber body 3 of the bearing 1 is of annular configuration. The rubber body 3 is divided radially by an intermediate ring 4 into an outer ring 5 and an inner ring 6. The rings 5, 6 have an identical thickness.

At least two, preferably four structural elements 7 are configured so as to surround the rubber body 3 over its circumference. In other words, the rubber body 3 is arranged in the structural elements 7, in the receiving opening 8 thereof.

The at least two structural elements 7 are configured from metal or plastic. The bearing 1, comprising the rubber body 3 and the structural elements 7, is preferably produced in a vulcanization process, as a result of which an adhesive connection of the rings 5, 6 to the intermediate ring 4 and the structural elements 7 is achieved. The structural elements 7 have an outer circumference which is configured so as to surround the rubber body 3 only in sections.

In the exemplary embodiment which is shown, the structural elements 7 have, to this end, a plurality of compression gaps 9 such that they are distributed over their outer circumference. Said compression gaps 9 extend radially, starting from an outer face 10 of the structural elements 7, as far as the outer ring 5. In order to bring about a prestress on the outer ring 5, the structural elements 7 are pressed together with the aid of a clip (not shown in greater detail), said structural elements 7 being pressed together to such an extent that the compression gaps 9 close as far as possible. In other words, faces 11 of the compression gaps 9 which are arranged so as to lie opposite one another make contact at least virtually or partially in the assembly with the anti-roll bar.

The compression gaps 9 are preferably configured symmetrically over a circumference of the outer ring 5.

In one exemplary embodiment which is not shown in greater detail, the bearing 1 has a hinge in the form of an integral hinge. Said integral hinge is configured on the bearing 1 of rotationally symmetrical configuration between two compression gaps 9, with the result that the necessary compression force for achieving the required prestress can be achieved.

The bearing 1 according to the invention is produced with the aid of a vulcanization process, as a result of which a connection of the structural elements 7 to the outer ring 5 and a connection of the outer ring 5 to the intermediate ring 4 and a connection of the intermediate ring 4 to the inner ring 6 is produced in a simple way. In the exemplary embodiment which is shown, a radial first extent E1 of the outer ring 5 is smaller than a radial second extent E2 of the inner ring 6.

## Claims

1. A bearing for an anti-roll bar of a motor vehicle, having a rubber body (3) and at least two structural elements (7), the rubber body (3) being divided radially by an intermediate ring (4) into an outer ring (5) and an inner ring (6), **characterized in that**, in order to achieve a prestress which acts on the outer ring (5), the at least two structural elements (7) have an outer circumference which is configured so as to surround the outer ring (5) only in sections, wherein the at least two structural elements (7) have at least one radially extending compression gap (9) which is configured so as to extend, starting from an outer face (10) of the outer shell (7), as far as but outside the outer ring (5).

2. The bearing as claimed in claim 1, **characterized in that** the at least one compression gap (9) is filled at least partially with a compressible medium.

3. The bearing as claimed in claim 1 or 2, **characterized in that** the at least two structural elements (7) have a plurality of compression gaps (9).

4. The bearing as claimed in claim 3, **characterized in that** the compression gaps (9) are arranged symmetrically over a circumference of the outer ring (5).

5. The bearing as claimed in one of the preceding claims, **characterized in that** the outer ring (5) is connected to the at least two structural elements (7) and/or to the intermediate ring (4).

6. The bearing as claimed in one of the preceding claims, **characterized in that** the inner ring (6) is connected to the intermediate ring (4).

7. The bearing as claimed in one of the preceding claims, **characterized in that** the bearing (1) is produced with the aid of a vulcanization process.

8. The bearing as claimed in one of the preceding claims, **characterized in that** the intermediate ring (4) is manufactured from metal or plastic.

## Patentansprüche

1. Lager für einen Stabilisator eines Kraftfahrzeugs, aufweisend einen Gummikörper (3) und mindestens zwei Strukturelemente (7), wobei der Gummikörper (3) von einem Zwischenring (4) in einen äußeren Ring (5) und einen inneren Ring (6) radial geteilt ist, **dadurch gekennzeichnet, dass** zur Erzielung einer auf den äußeren Ring (5) wirkenden Vorspannung die mindestens zwei Strukturelemente (7) einen Außenumfang aufweisen, welcher den äußeren Ring (5) nur abschnittsweise umfassend ausgebildet ist, wobei die mindestens zwei Strukturelemente (7) mindestens einen sich radial erstreckenden Kompressionsspalt (9) aufweisen, der sich ausgehend von einer Außenfläche (10) der Außenschale (7) bis zum, aber außerhalb des äußeren Rings (5) erstreckend ausgebildet ist.

2. Lager nach Anspruch 3, **dadurch gekennzeichnet, dass** der mindestens eine Kompressionsspalt (9) zumindest teilweise mit einem kompressiblen Medium gefüllt ist.

3. Lager nach Anspruch 1 oder 2, **dadurch gekennzeichnet, dass** die mindestens zwei Strukturelemente (7) mehrere Kompressionsspalte (9) aufweisen.

4. Lager nach Anspruch 3, **dadurch gekennzeichnet, dass** die Kompressionsspalte (9) symmetrisch über einen Umfang des äußeren Rings (5) angeordnet sind.

5. Lager nach einem der vorhergehenden Ansprüche, **dadurch gekennzeichnet, dass** der äußere Ring (5) mit den mindestens zwei Strukturelementen (7) und/oder mit dem Zwischenring (4) verbunden ist.

6. Lager nach einem der vorhergehenden Ansprüche, **dadurch gekennzeichnet, dass** der innere Ring (6) mit dem Zwischenring (4) verbunden ist.

7. Lager nach einem der vorhergehenden Ansprüche, **dadurch gekennzeichnet, dass** das Lager (1) mit Hilfe eines Vulkanisationsverfahrens hergestellt ist.

8. Lager nach einem der vorhergehenden Ansprüche, **dadurch gekennzeichnet, dass** der Zwischenring (4) aus Metall oder Kunststoff gefertigt ist.

## Revendications

1. Palier pour une barre antiroulis d'un véhicule automobile, comprenant un corps en caoutchouc (3) et au moins deux éléments de structure (7), le corps en caoutchouc (3) étant divisé radialement par une bague intermédiaire (4) en une bague extérieure (5) et une bague intérieure (6), **caractérisé en ce que**, pour réaliser une précontrainte qui agit sur la bague extérieure (5), les au moins deux éléments de structure (7) ont une circonférence extérieure qui est configurée de manière à entourer la bague extérieure (5) uniquement partiellement, les au moins deux éléments de structure (7) ayant au moins une fente de compression (9) s'étendant radialement qui est configurée de manière à s'étendre, à partir d'une face extérieure (10) de l'enveloppe extérieure (7), aussi loin que la bague extérieure (5) mais à l'extérieur de celle-ci.

2. Palier selon la revendication 1, **caractérisé en ce que** l'au moins une fente de compression (9) est remplie au moins partiellement avec un milieu compressible.

3. Palier selon la revendication 1 ou 2, **caractérisé en ce que** les au moins deux éléments de structure (7) présentent plusieurs fentes de compression (9).

4. Palier selon la revendication 3, **caractérisé en ce que** les fentes de compression (9) sont disposées symétriquement sur une circonférence de la bague extérieure (5).

5. Palier selon l'une des revendications précédentes, **caractérisé en ce que** la bague extérieure (5) est reliée aux au moins deux éléments de structure (7) et/ou à la bague intermédiaire (4).

6. Palier selon l'une des revendications précédentes, **caractérisé en ce que** la bague intérieure (6) est reliée à la bague intermédiaire (4).

7. Palier selon l'une des revendications précédentes, **caractérisé en ce que** le palier (1) est fabriqué à l'aide d'un procédé de vulcanisation.

8. Palier selon l'une des revendications précédentes, **caractérisé en ce que** la bague intermédiaire (4) est fabriquée en métal ou en matière plastique.
